**Europäisches Patentamt**

**European Patent Office**

**Office européen des brevets**

(11) Veröffentlichungsnummer: **0 148 982**
A2

(12) **EUROPÄISCHE PATENTANMELDUNG**

(21) Anmeldenummer: **84107649.0**

(22) Anmeldetag: **02.07.84**

(51) Int. Cl.⁴: **A 47 J 31/30**

(30) Priorität: **01.07.83 HU 239283**

(43) Veröffentlichungstag der Anmeldung:
**24.07.85 Patentblatt 85/30**

(84) Benannte Vertragsstaaten:
**AT BE CH DE FR GB IT LI LU NL SE**

(71) Anmelder: **Alkoto Ifjuság Egyesülés
Jokai u. 8
H-1066 Budapest, VI(HU)**

(72) Erfinder: **Vass, Antal
Mezö Imre utca 7
H-2141 Csömör(HU)**

(72) Erfinder: **Vass, Tibor
Mezö Imre utca 7
H-2141 Csömör(HU)**

(74) Vertreter: **Patentanwälte Viering & Jentschura
Steinsdorfstrasse 6
D-8000 München 22(DE)**

(54) Verfahren und Gerät zur Zubereitung von Cremekaffee.

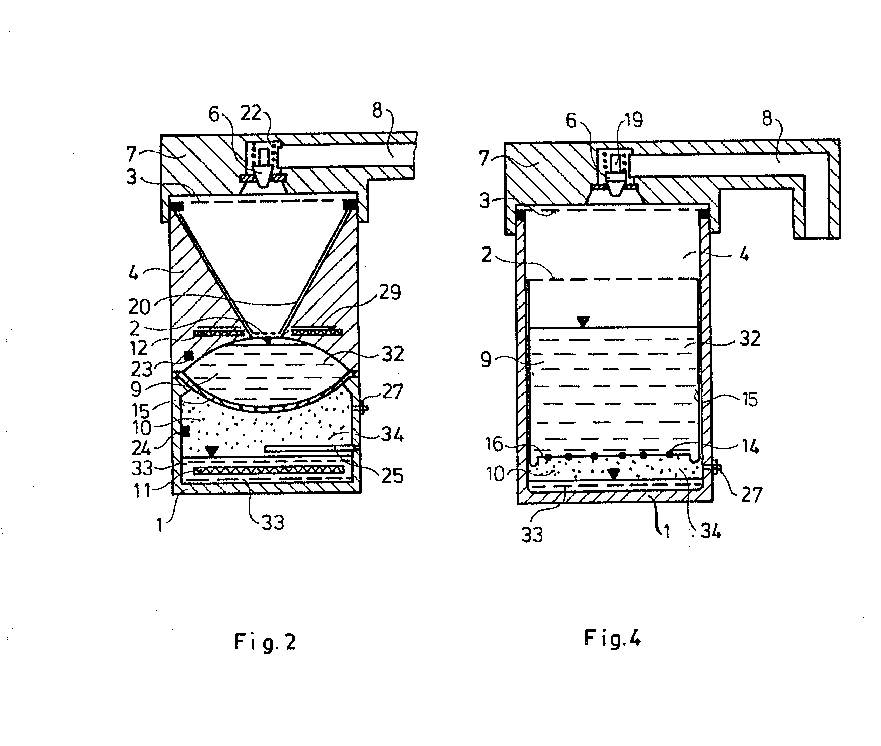

(57) Die Erfindung betrifft ein Verfahren und ein Gerät zur Zubereitung von Cremekaffee. Dem Verfahren nach wird in einem Heizkessel (1) Preßwasser (33) zum Kochen gebracht, Dampf (34) erzeugt, mit dem Dampf (34) einerseits in dem selben Heizkessel (1) vorhandenes Brühwasser (32) aufgewärmt und andererseits nach Erreichen einer erwünschten Brühwassertemperatur durch ein Kaffeemahlgut hindurchgedrückt. Das dabei entstandene Getränk wird dann durch ein Element kleinen Querschnittes hindurchgeführt, wobei sich die Strömungsgeschwindigkeit des Getränkes wesentlich erhöht. Das vorgeschlagene Gerät weist einen druckdichten Heizkessel (1) mit einem Austritt auf, in dem eine Verjüngung (6) ausgebildet ist. In dem Heizkessel (1) sind die üblichen Elemente zur Herstellung eines Kaffeegetränkes vorhanden. Es handelt sich erfindungsgemäß um ein Gerät, bei dem der Heizkessel (1) in zwei Teilräume unterteilt ist, nämlich in einen Teilraum für das Brühwasser (32) und das Mahlgut, und in einen anderen für das zur Erwärmung des Brühwassers (32) vorgesehene Preßwasser (33), wobei die zwei Teilräume durch eine Wand (15, 16) getrennt sind. Mit Hilfe des erfindungsgemäßen Verfahrens und Gerätes sind die genaue Einstellung der Bedingungen der Kaffeezubereitung und die Herstellung von Cremekaffee höchsten Genußwertes möglich (Fig. 4).

Fig.4

Croydon Printing Company Ltd.

Anwaltsakte 4589

1

## Verfahren und Gerät zur Zubereitung von

## Cremekaffee

Die Erfindung betrifft ein Verfahren und ein Gerät zur Zubereitung von sog. Cremekaffee, d.h. solchem Kaffee vom Espresso-Typ, der mit einer sich auf der Oberfläche des Kaffeegetränkes haltenden Cremeschicht versehen ist. Nach dem erfindungsgemäßen Verfahren wird Brühwasser aufgewärmt und durch ein Kaffeemahlgut hindurchgeführt. Dabei wird ein Kaffeegetränk hergestellt, das anschließend gesammelt wird. Das Gerät weist ein Brühwasser enthaltendes Gehäuse und einen Mahlguthalter auf, wobei der Mahlguthalter mit einem mit dem Innenraum des Gehäuses kommunizierenden Eintritt und einem das durch Brühwasser angefertigte Getränk weiterleitenden Austritt versehen ist, wobei der Eintritt einen Eintrittsfilter und der Austritt einen Austrittsfilter aufweisen und der Austritt mit einer Austrittsöffnung verbunden ist. Unter Verwendung des erfindungsgemäßen Verfahrens und Geräts ist es möglich, auch in Haushaltungen auf einfache Weise Cremekaffee zuzubereiten.

Bei der Zubereitung des Kaffeegetränkes werden verschiedene chemische Verbindungen aus den Körnchen des als Mahlgut vorhandenen Kaffees unter Einfluß des heißen Wassers oder Dampfes gelöst oder in solche Verbindungen umgewandelt, die unter diesen Bedingungen lösbar sind. Die Qualität des Kaffeegetränkes ist abhängig von der Temperatur, der Verwendungsdauer des Wassers (Dampfes), der Sorte des Kaffees und der Art der Zubereitung (Röstung, Größe der Körnchen) des Kaffees, so daß dementsprechend Kaffeegetränke von unterschiedlicher Qualität entstehen

können. Obwohl der Einfluß der Sorte und der Art der Zubereitung des Kaffees eine wichtige Rolle spielen, wird dies von der Erfindung nicht berührt.

In vielen Ländern wird am liebsten und meistens der Kaffee als Cremekaffee genossen, der dadurch gekennzeichnet ist, daß seine Oberfläche mit einer relativ beständigen cremeartigen Schicht bedeckt ist, die unter Einwirkung der im Kaffee vorhandenen flüchtigen Öle und anderen leicht verflüchtigbaren Verbindungen - wie Untersuchungen bewiesen haben - und bei Vorhandensein der gelösten Luft entsteht. Cremekaffee höchster Qualität entsteht unter solchen Bedingungen, daß durch den gemahlenen Kaffee Brühwasser mit höchstens 105°C Temperatur hindurchgedrückt wird, d.h. Wasser von nicht zu hoher Temperatur kommt nur kurze Zeit mit dem gemahlenen Kaffee in Berührung. In den Haushalten ist es bis zur Zeit praktisch unmöglich gewesen, auf einfache Weise Cremekaffee zuzubereiten. Dies ist bisher nur mit Hilfe solcher Anlagen möglich, die eine verkleinerte Version der bekannten gastronomischen Großanlagen von kompliziertem mechanischen Aufbau aufweisen. Der Grund hierfür ist darin zu sehen, daß in den einfachen Espressomaschinen oder Filtermaschinen zur Zubereitung des Kaffeegetränkes entweder die Temperatur die oben angeführte Grenze überschreitet, oder das Brühwasser eine zu lange Zeitdauer mit dem gemahlenen Kaffee in Berührung kommt. In beiden Fällen entsteht ein Kaffeegetränk, das einen geringeren Genußwert als der Cremekaffee hat.

Die bekannten Geräte zur Zubereitung von Cremekaffee enthalten druckerhöhende Einheiten, die dazu vorgesehen sind, bei Erreichung der gewünschten Temperatur das Brühwasser durch das Mahlgut hindurchzupressen. Die einfachste Lösung der Druckerhöhung besteht in der Verwendung eines Kolbens, wie es aus der FR-PS 2 262 943 oder der US-PS 4 102 255 zu entnehmen ist. Nach der FR-PS wird in dem Innenraum des Brühwasserbehälters ein Kolben beweglich angeordnet, der zum Hindurchpressen des Brühwassers durch das Mahlgut vorgesehen ist. Der Kolben ist derart bemessen, daß ein einmaliger Hub desselben die Zubereitung der gewünschten Menge des Kaffeegetränkes sicherstellt. Der Nachteil dieser Konstruktion ist darin zu sehen, daß - neben der erforderlichen Verwendung von zusammenpassenden, beweglichen Elementen - unbedingt eine Temperaturkontrolle oder eine Ein-

richtung erforderlich ist, durch das Brühwasser auf einer konstanten Temperatur gehalten werden kann. Derartige Einrichtungen bedingen stets komplizierte und kostenmäßig sehr aufwendige Geräte. Nach der US-PS wird Brühwasser in einem Brühkessel aufgewärmt, aus dem die zur Zubereitung des Kaffeegetränkes notwendige Wassermenge entnommen und unter Verwendung eines Kolbens zuerst durch einen Kaltwasserbehälter - zwecks der Einstellung der Temperatur des Brühwassers - und danach durch das Kaffeemahlgut hindurchgeführt wird. Die Bewegung des Kolbens wird durch den Druck des aus dem Brühwasser erzeugten Dampfes gewährleistet. Diese Anlage enthält ebenfalls eine große Anzahl von beweglichen Elementen, so daß mit vielen möglichen Fehler- und Schadensquellen zu rechnen ist, durch die die Zuverlässigkeit des Gerätes erheblich gemindert wird.

Ein weiterer Nachteil der mit einem Kolben ausgestatteten, eine kleine Menge von Brühwasser ausnutzenden und in Haushalten verwendbaren Geräte zur Zubereitung von Cremekaffee ist in deren schlechten Regelbarkeit zu sehen. So kann zwar die notwendige Temperatur des Brühwassers relativ schnell erreicht werden, jedoch kann bei Fehlen einer entsprechenden Regelung leicht ein Überschreiten der Temperaturgrenzen erfolgen, was zu einem Kaffeegetränk minderer Qualität führt. Ein Regelsystem macht aber den Aufbau des Gerätes kompliziert und zu kostenaufwendig.

In der AT-PS 264 039 ist ein zur Zubereitung eines Kaffeegetränkes geeignetes Gerät beschrieben, das auch zur Zubereitung von Cremekaffee geeignet ist. Dieses Gerät enthält einen Brühwasserbehälter und ein in einem Gehäuse angeordnetes Expansionsgefäß, das als Wellenbalgkörper ausgeführt ist. In einem Fortsatz enthält das Expansionsgefäß eine leicht verdampfende Flüssigkeit, z.B. Äther. Unter Wärmeaufnahme von dem Brühwasser und unter Einwirkung einer Heizpatrone wird bei entsprechender Temperatur diese Flüssigkeit verdampft und der derart entstandene Dampf bewirkt eine Vergrößerung des Expansionsgefäßes, das als Kolben wirkt und das Brühwasser durch das Kaffeemahlgut hindurchpreßt. Der Nachteil dieser Lösung besteht darin, daß der Inhalt des Wellenbalgkörpers bei einer Beschädigung in das Wasser und damit in die Umgebung abfließen kann, wodurch die Gefahr der Verunreinigung der Anlage und der Umgebung besteht. Um dies zu vermeiden, sind ziemlich komplizierte Überwachungs- und Schutzeinrichtungen erforderlich.

Aus der AT-PS 285 085 ist ein Gerät bekannt, bei dem ein Brühwasserbehälter und ein Warmwasserbehälter vorhanden sind, die miteinander durch eine Rohrleitung verbunden sind. Das Wasser wird in beiden Behältern aufgewärmt, aber bei Erreichen der erwünschten Temperatur in dem Brühwasserbehälter wird aus dem anderen Behälter durch die Rohrleitung Dampf zugeführt und dadurch der Durchfluß des Brühwassers durch den gemahlenen Kaffee erzwungen. Das Gerät enthält daher zwei Heizeinheiten, zwei gesonderte Druckkessel und ein kompliziertes Rohrsystem. Der komplizierte Aufbau verursacht die Vergrößerung der Kosten, so daß das Gerät aus ökonomischen Gründen in Haushaltungen nur begrenzt zur Verwendung kommen kann.

In der DE-OS 19 21 052 ist eine Kaffeekochanlage beschrieben, die einen in zwei Räume unterteilten Wasserbehälter enthält, die durch ein Ventil miteinander verbunden sind. Eine bestimmte Wassermenge wird immer in einen aufheizbaren Raum eingefüllt, dort zum Kochen gebracht und der dabei entstehende Dampf wird zur Betätigung eines Kolbens verwendet, der das Brühwasser durch das Kaffeemahlgut hindurchpreßt. Diese Lösung erfordert ebenfalls die Verwendung von beweglichen Teilen, so daß die Anlage ziemlich kompliziert aufgebaut ist.

Die vorliegende Erfindung dient insbesondere zwei Zielen, nämlich einerseits die Bedingungen für eine Zubereitung von Cremekaffee mit Hilfe von den bekannten Geräten zu verbessern und andererseits ein solches Verfahren und ein zur Durchführung dieses Verfahrens geeignetes Gerät zu schaffen, durch welches auf einfache Weise Cremekaffee herstellbar ist.

Der Erfindung liegen zwei Erkenntnisse zugrunde. So wurde zuerst erkannt, daß zur Herstellung von Cremekaffee höchster Qualität es nicht nur erforderlich ist, die Temperatur und den Druck in solchen Grenzen zu halten, daß ein schnelles Durchpressen des Brühwassers durch das Kaffeemahlgut erreicht wird, sondern es vielmehr besonders vorteilhaft ist, die Fließgeschwindigkeit des angefertigten Kaffeegetränkes vor dem Herausleiten aus der Anlage bedeutend zu erhöhen, um dadurch die Bedingungen dafür zu verbessern, daß in erwünschtem Maß die flüchtigen Öle und andere Komponenten die Cremeausbildung sicherstellen. Ferner wurde festgestellt, daß die Anlagen zur Zubereitung des Cremekaffees sehr einfach aufgebaut werden können, falls ein Druckkessel in zwei Räume unterteilt wird, wobei in einem Raum eine kleine Menge Wasser zum Kochen gebracht wird und der dabei erzeugte Dampf zur Erwärmung und nach Erreichen der erwünschten Temperatur zum Durchpressen des Brühwassers durch das Kaffeemahlgut verwendet wird. Die erwünschte, den Wert von 105°C nicht überschreitende Temperatur des Brühwassers kann erfahrungsgemäß sehr effektiv durch eine entsprechende Auswahl der am Wärmetransport teilnehmenden Teile und der Aufheizeinrichtungen derart eingestellt werden, daß bei Erreichen der erforderlichen Temperatur auch der Druck des Brühwassers den gewünschten Wert hat.

Die Aufgabe der Erfindung besteht darin, - unter Berücksichtigung der oben genannten Erkenntnisse - ein Verfahren und ein zur Durchführung dieses Verfahrens geeignetes Gerät zu schaffen, mit dem einerseits die Qualität des in den bekannten Geräten hergestellten Cremekaffees verbessert und darüberhinaus auch in Haushaltungen mit einfachen Mitteln Cremekaffee hergestellt werden kann.

Zur Lösung der gestellten Aufgabe wurde ein Verfahren erarbeitet, bei dem Brühwasser aufgewärmt und bei Erreichen einer geeigneten Temperatur durch das Kaffeemahlgut hindurchgeführt wird. Dabei wird das Kaffeegetränk herstellt, das dann gesammelt wird, wobei erfindungsgemäß der Innenraum eines mit steifen Wänden begrenzten Druckkessels in zwei Räume unterteilt ist. Im ersten Teilraum ist das Brühwasser und im zweiten Teilraum - getrennt vom Brühwasser - wird Preßwasser aufgeheizt und dabei Dampf erzeugt. Das Brühwasser im ersten Teilraum wird durch das Preßwasser im zweiten Teilraum erwärmt und bei Erreichen der erwünschten Temperatur durch den Druck des Dampfes durch das Kaffeemahlgut hindurchgepreßt. Vor der Stelle, an der das durch das Kaffeemahlgut hindurchgepreßte Brühwasser in einem Behälter bzw. in einer Leitung aufgefangen wird, wird der Durchflußquerschnitt des Kaffeegetränkes vermindert und dadurch seine Strömungsgeschwindigkeit erhöht.

Zum Erreichen der erwünschten Temperatur wird vorteilhafterweise im wesentlichen die Wärmeenergie des Dampfes ausgenutzt, was bedeutet, daß zum Aufwärmen des Brühwassers bis auf die durch Wärmeleitung zugeführte Wärmeenergie nur die aus dem Dampf entzogene Wärmeenergie verwendet wird.

Das Durchpressen des Brühwassers durch das Kaffeemahlgut wird vorteilhafterweise durch ein unter Dampfdruck erfolgendes Verschieben der zwischen den Teilräumen angeordneten Trennwand erreicht, jedoch sind auch andere Lösungen vorstellbar, so zum Beispiel die Zuführung des Dampfes in den Brühwasserraum und zwar vorteilhafterweise oberhalb des Brühwasserpegels.

Erfahrungsgemäß ist, um eine sich haltende Cremeschicht zu erzeugen, der Wert des Druckes nicht so wichtig, jedoch aus Sicherheitsgründen ist es vorteilhaft, wenn die Strömungsgeschwindigkeit des Kaffeegetränkes auf einen Wert zwischen 2 m/s und 30 m/s erhöht wird.

Eine sich lange Zeit haltende Cremeschicht höchster Qualität wird dadurch erreicht, daß das Brühwasser auf eine Temperatur im Bereich von 65 bis 105°C, insbesondere in der Höhe von 80°C aufgewärmt wird und das fertige Kaffeegetränk nach seinem Sammeln bis auf eine Temperatur im Bereich von 62 bis 68 °C abgekühlt wird. Der wichtigste Vorteil dieser Lösung ist darin zu sehen, daß es möglich ist, den Kaffee im bestgenießbaren Zustand zu servieren. Die Kühlung ist insbesondere wichtig, wenn die Temperatur des Kühlwassers in einem höheren Bereich oberhalb von 80 °C liegt.

Zur Lösung der gestellten Aufgabe wird auch ein Gerät zur Zubereitung von Cremekaffee vorgeschlagen, das eine wichtige und einfache Ergänzung der bekannten Geräte darstellte und eine Verbesserung der Qualität der Creme und eine Steigerung der Cremebildung sicherstellt. Das Wesen dieses Gerätes, das - wie die bekannten - einen Brühwasser enthaltenden druckdichten Heizkessel, einen durch seinen Eintritt mit dem Innenraum des Druckkessels kommunizierenden, durch seinen Austritt ein mit dem Brühwasser zubereitetes Getränk weiterleitenden, mit einem Eintrittsfilter und einem Austrittsfilter versehenen Mahlguthalter, sowie eine das Brühwasser durch den Mahlguthalter hindurchleitende Einheit aufweist, wobei das Austrittsfilter mit einer Austrittsöffnung kommuniziert, besteht erfindungsgemäß darin, daß die Austrittsöffnung mit einer Verjüngung ausgebildet ist, wobei die Querschnittsfläche der Verjüngung kleiner als die kleinste Querschnittsfläche des Eintritts ist. Die Verjüngung wird vorteilhaft so ausgestaltet, daß ihre Querschnittsfläche zumindest dreimal und maximal zweihundertmal größer als die Querschnittsfläche einer Öffnung des Austrittsfilters ist.

Ebenso wird zur Lösung der gestellten Aufgabe ein insbesondere für den Haushalt vorgesehenes Gerät geschaffen, das einen mit einem Deckel abschließbaren druckdichten, Brühwasser aufnehmenden Heizkessel, einen durch seinen Eintritt mit dem Innenraum des Druckkessels komunizierenden, durch seinen Austritt von mit dem Brühwasser zubereitetes Getränk weiterleitenden, mit einem Eintrittsfilter und einem Austrittsfilter versehenen Mahlguthalter, sowie ein sich bei einem bestimmten Druck- und Temperaturwert in Betrieb setzendes Ventil aufweist, wobei das Austrittsfilter mit einer Austrittsöffnung versehen ist, die vorteilhafterweise mit einem Austrittsrohr kommuniziert, und wobei erfindungsgemäß der Eintritt des Mahlguthalters mit einem im Heizkessel ausgebildeten Brühwasserbehälter in Verbindung steht, so daß im Heizkessel ein vom Brühwasserbehälter getrennter Preßwasserbehälter ausgebildet ist, und die Austrittsöffnung mit einer Verjüngung ausgestaltet ist, die kleiner als die kleinste Querschnittsfläche des Eintritts ist.

Die Verjüngung ist vorteilhaft so ausgebildet, daß an ihrem Ausgang die Werte der Strömungsgeschwindigkeit des Getränkes im Bereich von 2 m/s bis 30 m/s liegen, was zum Beispiel dadurch erreicht wird, daß die Querschnittsfläche der Verjüngung zumindest dreimal und maximal zweihundertmal größer als die Querschnittsfläche einer Öffnung des Austrittsfilter ist.

Der bedeutende Vorteil der vorgeschlagenen Lösung besteht darin, daß keine beweglichen Elemente erforderlich sind, die ein genaues Zusammenpassen erfordern und einer genauen Vorbereitung bedürfen, damit bei ihrer Verwendung die sicherheitstechnischen Anforderungen garantiert eingehalten werden. Außerdem reicht bei der erfindungsgemäßen Lösung eine kleine Menge Brühwasser aus, um ein Kaffeegetränk zuzubereiten, so daß das Gerät relativ energiesparend arbeitet.

Das erfindungsgemäße Gerät kann vorteilhafterweise so ausgebildet werden, daß es ein dem Preßwasserbehälter zugeordnetes Heizelement und/oder ein dem Brühwasserbehälter zugeordnetes ergänzendes Heizelement aufweist. Es ist auch vorteilhaft, wenn das Gerät zwischen dem Brühwasserbehälter und dem Preßwasserbehälter wärmeleitende Elemente, z.B. eine Metallspirale und/oder Metallniete aufweist, wodurch der Wärmetransport beschleunigt und auch verbessert werden kann.

Das Heizelement ist nicht immer erforderlich, und bei seinem Fehlen kann eine äußere Wärmequelle, z.B. eine Gasflamme, verwendet werden.

Bei den für Haushaltungen vorgesehenen Geräten kann es insbesondere vorteilhaft sein, eine elastische Wand, z.B. eine Membrane zwischen dem Preßbehälter und dem Brühwasserbehälter vorzusehen. Bei einer großen Anzahl von bekannten Stoffen, die als Membranmaterial bzw. als Material für die elastische Wand verwendet werden können, z.B. bei Silikongummi, kann die Elastizität bis zu einer Temperatur von zumindest 150°C gewährleistet werden. Bei den erfindungsgemäßen Geräten kann die elastische Wand verschiedenartig ausgebildet sein, besonders vorteilhaft ist es jedoch, wenn sie kugelartig ausgebildet ist, wobei der kugelartige Körper am Eintritt des Mahlguthalters angeordnet ist.

Eine andere vorteilhafte Lösung besteht darin, daß der Brühwasserbehälter mit einer als rollende Membrane ausgebildeten Wand versehen und verschlossen ist.

Den gewonnenen Erkenntnissen entsprechend kann eine sehr vorteilhafte Lösung dadurch erreicht werden, daß der Brühwasserbehälter und der Preßwasserbehälter durch eine steife oder weniger elastische Wand voneinander getrennt und durch eine Öffnung verbunden sind, die im Brühwasserbehälter oberhalb des Brühwasserpegels angeordnet ist.

Der Brühwasserbehälter kann daher als ein geschlossener, mit dem Eintritt des Mahlguthalters oder durch eine Öffnung mit dem Preßwasserbehälter verbundener Körper ausgebildet werden.

Die Verjüngung wird vorteilhaft in Form einer durch ein Ventil abschließbare Stauöffnung oder Düse realisiert. Hinter dieser kann in der Wand des Aus-

trittsrohrs eine Saugöffnung ausgebildet werden, die nach dem Prinzip des Venturirohrs wirkt und Luft in die strömende Flüssigkeit einsaugt, wodurch eine intensive Schaumbildung im ganzen Flüssigkeitsvolumen gewährleistet wird.

Die Verjüngung kann auch als ein Ventil realisiert werden, das als ein Schwellenwertschalter hoher Histeresis wirkt, so daß das Kaffeegetränk nur nach Erreichen eines bestimmten Druckes fließen kann, und der Weg nicht über eine lange Zeitdauer gesperrt ist.

Die erfindungsgemäßen Lösungen ermöglichen eine wesentliche Verbesserung der Qualität des Cremekaffees gegenüber den bekannten Möglichkeiten und gleichzeitig wird durch die erfindungsgemäßen Lösungen eine energiesparende auch in Haushaltungen durchzuführende Herstellung von Cremekaffee höchsten Genußwertes ermöglicht.

Die Erfindung wird im folgenden anhand von beispielhaft dargestellten Ausführungsformen der erfindungsgemäßen Vorrichtungen näher erläutert, wobei auf die beiliegende Zeichnung Bezug genommen wird. In der Zeichnung zeigt:

Fig. 1 eine erfindungsgemäße, als Ergänzungsteil für die bekannten Geräte verwendbare Vorrichtung zur Herstellung von Cremekaffee,

Fig. 2 eine mit einer Membrane versehene Ausführungsform des erfindungsgemäßen Geräts,

Fig. 3 eine mit einer Membrane und einer Metallspirale versehene Ausführungsform des erfindungsgemäßen Geräts,

Fig. 4 eine in Kombination mit einer steifen und einer elastischen Wand realisierte Ausführungsform des erfindungsgemäßen Geräts,

Fig. 5 eine mit einem durch eine kugelartige Wand begrenzten Innenteil realisierte Ausführungsform des erfindungsgemäßen Geräts,

Fig. 6 eine mit einer steifen Wand realisierte Ausführungsform des erfindungsgemäßen Geräts, und

*Fig. 7 eine vorteilhafte Ausbildung der zur Zubereitung des Cremekaffees erfindungsgemäß in der Austrittsöffnung vorgesehenen Querschnittsverjüngung.*

*Zur Verwirklichung des erfindungsgemäßen Verfahrens ist ein mit einer steifen äußeren Wand geschlossener Raum in zwei Teilräume unterteilt. In dem ersten Teilraum wird Brühwasser zugeführt und in den zweiten, der im allgemeinen viel kleiner als der erste ist, wird Preßwasser eingefüllt, das dort aufgeheizt wird, wobei Dampf erzeugt wird. Mit Hilfe des Dampfes und gegebenenfalls auch unter Verwendung einer ergänzenden Heizung wird das Brühwasser auf eine erwünschte Temperatur gebracht und gleichzeitig werden die Erzeugung des Dampfes und/oder der Mechanimus der Heizung – durch entsprechende Auswahl der an den thermischen Prozessen teilnehmenden Stoffe und Volumina – so reguliert, daß, sobald sich die gewünschte Brühwassertemperatur eingestellt hat, der Dampfdruck denjenigen Wert erreicht, der erforderlich ist, das Brühwasser durch das in dem das Brühwasser enthaltenden Teilraum angeordnete Kaffeemahlgut hindurchpressen zu können. Unter diesen Bedingungen fließt das Brühwasser durch das Mahlgut und dabei wird ein Kaffeegetränk hergestellt. Das Getränk wird dann durch eine Öffnung mit kleiner Querschnittsfläche hindurchgeleitet und danach gesammelt. Diese Öffnung, die z.B. als Stauöffnung oder Düse ausgebildet ist, stellt auf der Oberfläche des Kaffeegetränkes die Ausbildung einer Cremeschicht sicher.*

*Die Getränkeherstellung kann über einen relativ großen Druck- und Temperaturbereich erfolgen. Die Querschnittsfläche der Verjüngung wird für die Cremebildung dabei so ausgewählt, daß eine den jeweiligen Druck- und/oder Temperaturwerten entsprechende Strömungsgeschwindigkeit erreicht wird. Erfahrungsgemäß wird die beste Cremekaffeequalität bei Geschwindigkeiten von 2 m/s bis 30 m/s erreicht. Die niedrigeren Geschwindigkeitswerte sind aus dem Grund vorteilhafter, da zu ihnen die niedrigeren Dampfdruckwerte gehören.*

*Was die Temperatur anbelangt, so sind Temperaturen im Bereich von 65 bis 105°C, insbesondere in der Nähe von 80°C vorteilhaft. Unterhalb einer Temperatur von 65°C ist praktisch kein gutes Kaffeegetränk herstellbar, und bei*

*105°C überschreitenden Temperaturen kann lediglich ein Cremekaffeegetränk verminderten Genußwertes hergestellt werden. Die Angabe des Temperaturbereiches ist so zu verstehen, daß wenn die Temperatur des Brühwassers 90°C überschreitet, es vorteilhaft ist, eine schnelle Kühlung des fertigen Kaffeegetränkes auf den Temperaturbereich von 62 bis 68°C durchzuführen, da dann eine auf dem Kaffeegetränk sich haltende Cremeschicht gewährleistet ist. Falls das Brühwasser eine Temperatur von etwa 80°C hat, kann auf dem Kaffeegetränk eine sich auf dessen Oberfläche haltende Cremeschicht sichergestellt werden, wobei sich das Kaffeegetränk auch ohne ergänzende Kühlung auf den erwähnten niedrigeren Temperaturbereich abkühlt.*

*Der Dampfdruck ist unter dem Gesichtspunkt der Getränkeherstellung von sekundärer Bedeutung. So ist es nicht erforderlich, daß der Dampfdruck unbedingt im Bereich von 180 bis 280 kPa, vorteilhaft in der Nähe von 250 kPa, liegen. Erfahrungsgemäß kann der Cremekaffee höchster Qualität auch bei viel höheren, z.B. 1 MPa ausmachenden Drücken hergestellt werden: dieser Bereich ist jedoch bei den für den Haushalt vorgesehenen Anlagen - aus sicherheitstechnischen und energetischen Gründen - nicht vorteilhaft, da derartige Anlagen Geräte mit erheblich stärkeren Wanddicken erfordern.*

*Nach dem erfindungsgemäßen Verfahren besteht ein wesentliches Merkmal darin, den Strömungsweg des Kaffeegetränkes an einer Stelle sehr eng einzuschnüren, was im Gerät durch die Anordnung eines engen Strömungsquerschnittes im Wege der Strömung des Kaffeegetränkes erreicht wird. Dadurch wird die Strömungsgeschwindigkeit des Kaffeegetränkes bedeutend erhöht, was erfahrungsgemäß, unter Anwesenheit der Luft, die beste Voraussetzung für eine gute Cremebildung ist und zu einem Kaffeegetränk führt, auf dem ein sich haltender Cremeüberzug angenehmen Aussehens schwimmt.*

*Im Wege der Strömung des Kaffeegetränkes, unmittelbar nach dem engen Querschnitt kann in der den Strömungsweg umfassenden Wand eine Öffnung vorgesehen werden, durch die entsprechend dem Prinzip des Venturirohres wirkend Luft in das Getränk eingeführt wird, dessen gesamtes Volumen dadurch aufgeschäumt wird.*

*Zur Zubereitung des Kaffeegetränkes kann selbst eine kleine Menge Preßwas-*

ser ausreichen, da der daraus entstehende Dampf genügt, um das Brühwasser aufzuwärmen und durchzupressen. Daher ist das vorgeschlagene Verfahren energiesparend. Etwa 2 cm$^3$ Preßwasser sind genug, Brühwasser für 4 Tassen Kaffee aufzuwärmen und durch das Kaffeemahlgut hindurchzupressen.

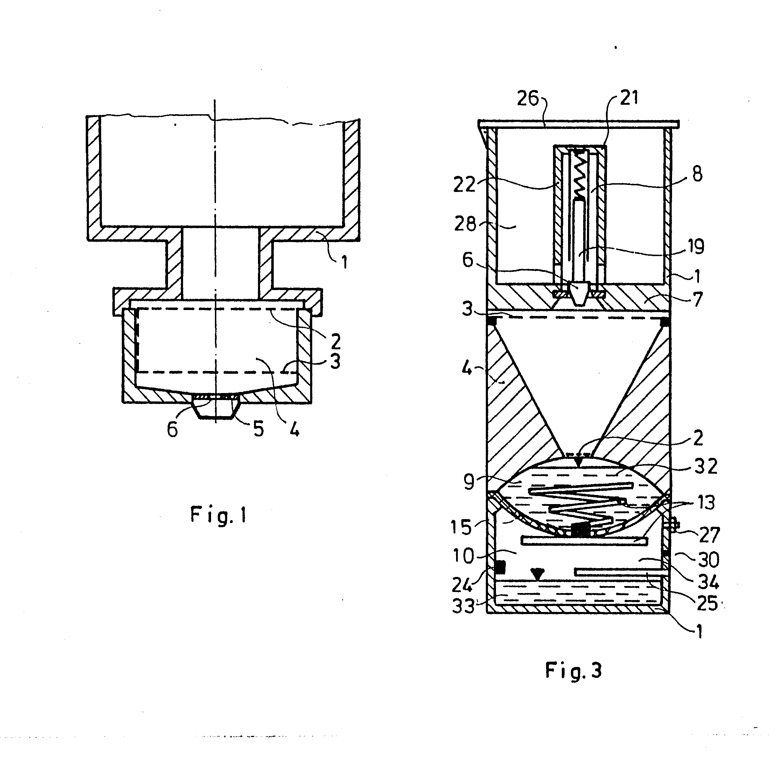

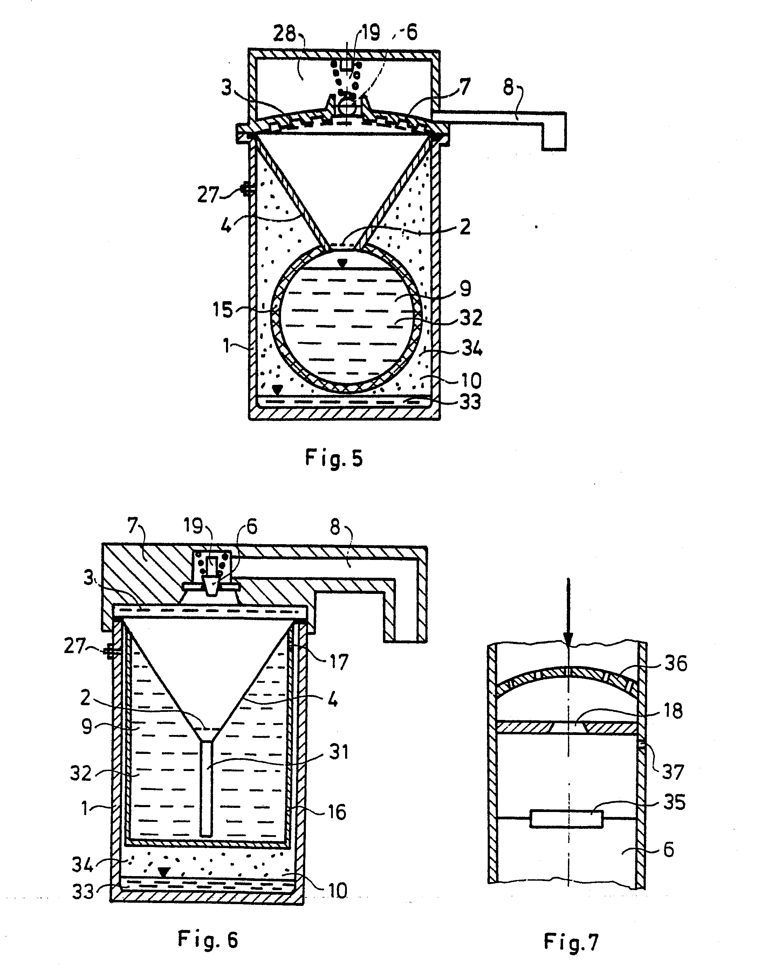

Erfindungsgemäß wird einerseits ein für die bekannten Geräte (Fig. 1) verwendbares und das erfindungsgemäße Verfahren realisierbares Zusatzgerät zur Zubereitung von Cremekaffee sowie andererseits ein vollständig neues, das erfindungsgemäße Verfahren realisierendes Gerät (Fig. 2, 3, 4, 5 und 6) vorgeschlagen. Das Zusatzgerät ist ein Gerät, das einen Brühwasser enthaltenden druckdichten Heizkessel 1, einen mit dem Austritt des Heizkessels 1 verbundenen, mit einem Eintrittsfilter 2 und einem Austrittsfilter 3 versehenen Mahlguthalter 4, eine mit dem Austritt des Mahlguthalters 4 kommunizierende Austrittsöffnung 5 und eine in der Austrittsöffnung 5 angeordnete Verjüngung 6 sowie eine in der Zeichnung nicht gezeigte, zur Durcharbeitung des Brühwassers durch den Mahlguthalter 4 vorgesehene Einheit aufweist. Das wesentliche Merkmal dieses Zusatzgerätes ist in der Anordnung der Verjüngung 6 zu sehen, die zum Beispiel eine Stauöffnung 18 sein kann (Fig. 7) oder als eine Düse ausgebildet werden kann. Erfahrungsgemäß bewirkt die Verjüngung 6 eine wesentliche Verbesserung der Qualität des mit einer Cremeschicht bedeckten Kaffeegetränkes. Dazu ist es erforderlich, daß durch die Verjüngung 6 eine wesentliche Erhöhung der Strömungsgeschwindigkeit gegenüber der des auf dem Wege von dem Austrittsfilter 3 zur Verjüngung 6 aus dem Austrittsfilters 3 ausfließenden Kaffeegetränkes bewirkt wird. Diese erhöhte Geschwindigkeit beträgt im allgemeinen zumindest 2 m/s. Bei Geräten, die mit niedrigeren Druckwerten, z.B. etwa 250 kPa arbeiten, beträgt die Querschnittsfläche der Verjüngung 6 etwa 0,1 bis 5 mm$^2$.

Bei einer anderen Auführungsform ist die Querschnittsfläche der Verjüngung 6 zumindest dreimal, maximal jedoch zweihundertmal so groß wie die einer Durchtrittsöffnung des Austrittsfilters 3. Dreimal so groß ist deshalb vorteilhaft, damit ein Verstopfen der Öffnungen durch die Kaffeekörnchen verhindert wird. Der Verjüngung 6 kann ein Sicherheitsfilter 36 vorgeschaltet (Fig. 7) werden. Die Verjüngung 6 kann bei allen Geräten zur Zubereitung von Cremekaffee vorgesehen sein und ihr Einfluß kann durch den Einbau eines Stauelementes 35 und/oder Ausbildung einer Saugöffnung 37 (Fig. 7) intensiviert werden. Die Verjüngung 6 kann zum Beispiel in einem mit einem äußeren Gewinde versehenen rohrförmigen Element (z.B. nach Fig. 7) angeordnet sein, das in einem entsprechenden der Austrittsöffnung 5 ausgebildeten Gewinde eingeschraubt und gegen ein Herausfallen gesichert ist.

Das erfindungsgemäße Gerät weist insbesondere bei den für Haushaltungen vorgesehenen Asführungsformen (Fig. 2 bis 6) einen druckdichten Heizkessel 1, ein den Heizkessel 1 abschließenden Deckel 7, einen mit einem Eintrittsfilter 2 und einem Austrittsfilter 3 versehenen Mahlguthalter 4 sowie ein vor oder hinter dem Mahlguthalter 4 angeordnetes, bei einem bestimmten Druckwert und/oder Temperaturwert sich in Betrieb setzendes Ventil 19 auf. Der Heizkessel 1 ist in einen Brühwasserbehälter 9 und einen davon durch eine elastische Wand 15 oder steife Wand 16 getrennten Preßwasserbehälter 10 unterteilt, wobei der Brühwasserbehälter 9 mit dem Eintritt des Mahlguthalters 4 verbunden ist. Der Austritt des Mahlguthalters 4, dies ist das Austrittsfilter 3, ist mit einer Austrittsöffnung 5 verbunden, die eine Verjüngung 6 ausweist. Im Deckel 7 kann ein mit der Austrittsöffnung 5 verbundenes Austrittsrohr 8 angeordnet sein. Der Deckel 7 kann auf dem Heizkessel 1 durch eine lösbare, druckdichte Verbindung gehalten sein, die beispielsweise in Form einer bekannten Bajonettverbindung ausgebildet ist.

Im Brühwasserbehälter 9 sind Brühwasser 32 und im Preßwasserbehälter 10 Preßwasser 33 eingefüllt, das zur Erzeugung von Dampf 34 dient. Zur Erwärmung des Preßwassers 33 kann ein Heizelement 11 vorgesehen sein (Fig. 3), dessen Wirkung durch ein ergänzendes Heizelement 12, das beispielsweise im Bereich des Eintrittsfilters 2 (Fig. 2) angeordnet ist, verstärkt werden kann. Das erfindungsgemäße Gerät kann auch ohne Heizelement ausgebildet sein, sofern die Erwärmung durch eine äußere Wärmequelle, z.B. durch eine Gasflamme, gesichert ist.

Der Inhalt des Brühwasserbehälters 9 wird im allgemeinen durch Wärmetransport aufgeheizt. Zur Beschleunigung dieses Prozesses kann es vorteilhaft sein, verschiedene wärmeleitende Elemente, z.B. eine Metallspirale 13 (Fig. 3), einen oder mehrere Metallniete 14 (Fig. 4) zu verwenden, die in der elastischen Wand 15 oder steifen Wand 16 angeordnet sind.

Die elastische Wand 15 ist vorteilhafterweise als eine Membrane ausgeführt, die z.B. aus Silikongummi (Fig. 2 bis 5) gefertigt ist. Diese Membrane kann unter anderem als ein einen geschlossenen kugelartigen Körper bildender Ballon (Fig. 5) auf dem Eintritt des Mahlguthalters, als eine plattenartige, in der Wand des Heizkessels 1 eingespannte Membrane (Fig. 2 und 3) oder als eine rollende Membrane ausgebildet sein, die unter Einwirkung des Dampfes 34 entweder von unten nach oben (Fig. 4) oder in Richtung der Seitenwand des z.B. zylindrischen Heizkessels 1 beweglich ist. Durch eine Bewegung der Membrane kann das Volumen des Brühwasserbehälters verkleinert werden, wodurch das Brühwasser 32 aus dem Brühwasserbehälter 9 unter Druck durch den Mahlguthalter 4 gepreßt wird.

Die kugelartig ausgebildete Membran nach Fig. 5 kann auch mit einer steifen Wand 16 verwirklicht werden. Bei einer solchen Ausführungsform ist es jedoch vorteilhaft, daß oberhalb des Brühwasserpegels in der Wand 16 eine Öffnung vorgesehen ist, durch die der Dampf 34 hereingeführt werden kann. Die Verwendung einer steifen Wand 16 ist aber auch in einer anderen Weise möglich, wie es beispielsweise aus Fig. 6 ersichtlich ist. Der Brühwasserbehälter 9 ist hier als ein mit steifer Wand begrenztes, die Innenoberfläche des Heizkessels 1 nicht berührendes, auf einem Wandteil des Heizkessels 1 abgestütztes Gefäß ausgebildet. Zwischen der steifen Wand 16 und der Seitenwand des Heizkessels 1 sind kleine Spalte. Somit kann der Dampf 34 über eine große Oberfläche den Inhalt des Brühwasserbehälters 9 aufwärmen. In der steifen Wand 16 ist im oberen Teil des Gefäßes etwa in Höhe der Verbindungsstelle von Deckel 7 und Heizkessel 1 eine Öffnung 17 ausgebildet, durch die der Dampf 34 oberhalb des Brühwasserpegels in den Brühwasserbehälter 9 einströmen kann und die Erhöhung der Brühwassertemperatur bewirkt. Nach Erreichen der erwünschten Temperatur des Brühwassers 32 wird dasselbe durch ein Rohr 31 am Eintritt des Mahlguthalters 4 in denselben hineingedrückt. Bei einer derartigen Ausführungsform des Brühwasserbehälters 9 kann derselbe teilweise oder vollständig mit einer elastischen Wand 15 versehen sein.

Die Verjüngung 6 kann im Ventil 19 vorgesehen sein, sie kann aber vorteilhafterweise auch dahinter angeordnet sein. Das Ventil 19 ist vorteilhafterweise ein federbelastetes Ventil. Das wesentliche Merkmal der Verjüngung 6 besteht darin, daß eine wesentliche Erhöhung der Strömungsgeschwindigkeit des Kaffeegetränkes im Vergleich zur Geschwindigkeit der Strömung auf dem Weg von dem Austrittsfilter 3 zur Verjüngung 6 erzielt wird. Diese erhöhte Geschwindigkeit beträgt in der Regel zumindest 2 m/s. Bei Geräten, die mit niedrigeren Druckwerten, z.B. etwa 250 kPa arbeiten, bedeutet das, daß die Verjüngung 6 eine Querschnittsfläche von 0,1 bis 5 mm$^2$ hat.

Bei einer anderen vorteilhaften Ausführungsform des erfindungsgemäßen Gerätes ist die Querschnittsfläche der Verjüngung 6 zumindest dreimal - jedoch maximal zweihundertmal - so groß wie die einer einzelnen Öffnung des Austrittsfilters 3. Dadurch kann ein Verstopfen der Öffnungen durch die Kaffeekörnchen verhindert werden.

Das Ventil 19 ist vorteilhafterweise derart ausgebildet, daß es bei Erreichen eines bestimmten Druck- und/oder Temperaturwertes öffnet und danach mit hoher Hysteresis schließt. Eine sehr vorteilhafte Lösung besteht in der Verwendung eines in die Stauöffnung 18 eingepaßten, mit einer Feder belasteten kegelartigen Elementes, das durch den inneren Druck lediglich so angehoben wird, daß für das Kaffeegetränk in Richtung des Austrittsrohrs 8 ein Weg sehr geringen Querschnittes gewährleistet ist.

Wie aus Fig. 2 ersichtlich, kann der Mahlguthalter 4 mit einem Einsatz 20 zur Erleichterung der Einführung oder Entfernung des Mahlguts versehen sein und in diesem Falls kann eine Isolierplatte 29, welche eine Wärmeleitung in Richtung weg von dem Brühwasserbehälter 9 verhindert, zur Isolierung des ergänzenden Heizelementes 12 eingebaut sein. Die Einleitung der notwendigen Menge an Preßwasser 33 wird durch ein Niveaurohr 25 erleichtert. Um die Austrittsöffnung 5 kann ein Durchflußrohr 22 angeordnet sein und im Heizkessel 1 können Temperaturfühler 23, 24 zur Kontrolle der Innenraumtemperatur vorgesehen sein.

Der Deckel 7 kann mit einer Einstellschraube 21, durch die das Ausströmen des Kaffeegetränkes regulierbar ist, versehen sein (Fig. 3). Außerdem kann eine Abdeckung 26 vorteilhaft sein, die den Auffang- und Sammelraum für das Kaffeegetränk oberhalb des Deckels 7 abschließt. In diesem Falle wird das Austrittsrohr nicht in die Umgebung, sondern in einen Sammelbehälter 28 geführt, der durch die Abdeckung 26 begrenzt und mit einer Wärmeisolierung versehen ist.

0148982

Im erfindungsgemäßen Gerät ist aus Sicherheitsgründen ein Sicherheitsventil vorgesehen, daß beim Überschreiten eines bestimmtes Druckes den überschüßigen Dampf abläßt. Die Sicherheit wird auch durch die Verwendung von Schmelzeinsätzen 30 vergrößert.

Das erfindungsgemäße Gerät arbeitet auf folgende Weise:

Das Brühwasser 32 wird in erwünschter Menge in den Brühwasserbehälter 9 und bei einer Menge von vier Tassen Kaffee wird in den Preßwasserbehälter 10 Preßwasser 33 in einer Menge von 2 bis 4 cm$^3$ eingegossen. Das Preßwasser 33 wird z.B. mittels des Heizelementes 11 augewärmt oder durch eine äußere Wärmequelle zum Kochen gebracht. Dabei wird der Dampf 34 erzeugt. Die Wärmeenergie des Dampfes 34 wird durch die elastische Wand 15 oder steife Wand 16, im gegebenen Fall auch mit Hilfe der Metallspirale 13, oder Metallniete 14 dem Brühwasser 32 übermittelt. Der Dampf 34 kondensiert und sein Kondensat kehrt in den Preßwasserbehälter 10 zurück. Durch entsprechende Auswahl der Trennwand und der Bemessungen der wärmeleitenden Elemente wird gewährleistet, daß aus dem Preßwasser 33 Dampf 34 mit relativ niedrigem Druck so lange erzeugt wird, wie die Temperatur des Brühwassers 32 den nötigen Wert unterschreitet. Im Endbereich der Dampferzeugung wird erreicht, daß das Preßwasser praktisch völlig in Dampf verwandelt ist, und gleichzeitig der Druck des Dampfes so hoch ist, daß die Herstellung des Kaffeegetränkes, d.h. ein Verschieben der elastischen Wand 15 oder durch ein Ausgleichen des Dampfdruckes in beiden Behältern, anläuft und durchgeführt wird. Bei diesem Druck wird das Ventil 19 geöffnet, so daß Brühwasser 32 durch den Mahlguthalter 4 bzw. durch den darin angeordneten gemahlenen Kaffee hindurchfließen kann. Das fertige Getränk strömt durch die Verjüngung 6, durch die bei der erhöhten Strömungsgeschwindigkeit des hindurchströmenden Kaffeegetränkes die besagte Cremebildung erfolgt.

Mit Hilfe des erfindungsgemäßen Verfahrens und der erfindungsgemäßen Einrichtung sind die genaue Einstellung der Bedingungen der Kaffeezubereitung und die Herstellung von Cremekaffee höchsten Genußwertes möglich.

## PATENTANSPRÜCHE

1. Verfahren zur Zubereitung von Cremekaffee, wobei Brühwasser (32) aufgewärmt, bei Erreichen einer geeigneten Temperatur durch Kaffeemahlgut hindurchgeführt wird und dabei ein Kaffeegetränk hergestellt und gesammelt wird, dadurch gekennzeichnet, daß der Innenraum eines mit steifen Wänden begrenzten Druckkessels (1) in zwei Räume (9, 10) unterteilt wird, wobei im ersten Teilraum (9) das Brühwasser (32) eingefüllt wird, im zweiten vom Brühwasser (32) abgetrennten Teilraum (10), eingefülltes Preßwasser (33) aufgeheizt und dabei Dampf (34) erzeugt wird, daß das Brühwasser (32) durch das Preßwasser (33) erwärmt und bei Erreichen der erwünschten Temperatur durch den Druck des Dampfes (34) durch das Kaffeemahlgut hindurchgepreßt wird, und daß vor dem Sammeln des Kaffeegetränkes dasselbe durch eine Verjüngung (6) strömt, deren Durchflußquerschnitt derart vermindert wird, daß die Strömungsgeschwindigkeit des Kaffeegetränkes erhöht wird.

2. Verfahren nach Anspruch 1, dadurch gekennzeichnet, daß die Strömungsgeschwindigkeit des Kaffeegetränkes auf einen Wert zwischen 2 m/s und 30 m/s erhöht wird.

3. Verfahren nach Anspruch 1 oder 2, dadurch gekennzeichnet, daß das Brühwasser (32) wesentlich durch den aus dem Preßwasser (33) entständenen Dampf (34) auf die erwünschte Temperatur erwärmt wird.

4. Verfahren nach einem der Ansprüche 1 bis 3, dadurch gekennzeichnet, daß zum Hindurchpressen des Brühwassers (32) durch das Kaffeemahlgut der Dampf (34) oberhalb des Brühwasserpegels in den ersten Teilraum (9) eingeführt wird.

5. Verfahren nach einem der Ansprüche 1 bis 4, dadurch gekennzeichnet, daß das Brühwasser (32) auf eine Temperatur im Bereich von 65 bis 105°C, insbesondere in der Nähe von 80°C, erwärmt wird und das fertige Kaffeegetränk nach seinem Sammeln gegebenenfalls auf eine Temperatur im Bereich von 62 bis 68°C abgekühlt wird.

6. Verfahren nach einem der Ansprüche 1 bis 5, dadurch gekennzeichnet,

daß im zweiten Teilraum (10) der Druck des Dampfes (34) auf einen Wert im Bereich von 180 bis 280 kPa, insbesondere in der Nähe von 250 kPa, eingestellt wird.

7. Gerät zur Zubereitung von Cremekaffee, das einen Brühwasser (32) enthaltenden druckdichten Heizkessel (1), einen durch seinen Eintritt mit dem Innenraum des Druckkessels (1) kommunizierenden, durch seinen Austritt ein mit dem Brühwasser (32) zubereitetes Getränk weiterleitenden, mit einem Eintrittsfilter (2) und einem Austrittsfilter (3) versehenen Mahlguthalter (4), sowie eine das Brühwasser (32) durch den Mahlguthalter (4) hindurchführende Einheit aufweist, wobei das Austrittsfilter (3) mit einer Austrittsöffnung (5) kommuniziert, dadurch gekennzeichnet, daß die Austrittsöffnung (5) mit einer Verjüngung (6) ausgebildet ist, wobei die Querschnitssfläche der Verjüngung (6) kleiner als die kleinste Querschnittsfläche des Eintritts ist.

8. Gerät nach Anspruch 7, dadurch gekennzeichnet, daß die Querschnittsfläche der Verjüngung (6) zumindest dreimal und maximal zweihundertmal größer als die Querschnittsfläche einer Öffnung des Austrittsfilters (3) ist.

9. Gerät zur Zubereitung von Cremekaffee, insbesondere für Haushaltungen geeignetes Gerät, das einen mit einem Deckel (7) abschließbaren druckdichten, Brühwasser (32) aufnehmenden Heizkessel (1), einen durch seinen Eintritt mit dem Innenraum des Druckkessels kommunizierenden, durch seinen Austritt von mit dem Brühwasser (32) zubereitetes Getränk weiterleitenden, mit einem Eintrittsfilter (2) und einem Austrittsfilter (3) versehenen Mahlguthalter (4), sowie ein Ventil (14) aufweist, wobei das Austrittsfilter (3) mit einer Austrittsöffnung (5) und gegebenenfalls mit einem Austrittsrohr (8) kommuniziert, dadurch gekennzeichnet, daß der Eintritt des Mahlguthalters (4) mit einem im Heizkessel (1) ausgebildeten Brühwasserbehälter (9) in Verbindung steht, daß im Heizkessel (1) ein vom Brühwasserbehälter (9) getrennter Preßwasserbehälter (10) ausgebildet ist, und daß die Austrittsöffnung (5) mit einer Verjüngung (6) versehen ist, deren Querschnittsfläche kleiner als die kleinste Querschnitssfläche des Eintritts ist.

10. Gerät nach Anspruch 9, dadurch gekennzeichnet, daß die Querschnittsfläche der Verjüngung (6) zumindest dreimal und maximal zweihundertmal größer als die Querschnittsfläche einer Öffnung des Austrittsfilters (3) ist.

11. Gerät nach Anspruch 9 oder 10, dadurch gekennzeichnet, daß die Verjün-gung (6) derart ausgebildet ist, daß an ihrem Ausgang die Strömungsge-schwindigkeit des Getränkes zwischen 2 m/s bis 30 m/s beträgt.

12. Gerät nach einem der Ansprüche 9 bis 11, dadurch gekennzeichnet, daß ein dem Preßwasserbehälter (10) zugepaßtes Heizelement (11) vorgesehen ist.

13. Gerät nach einem der Ansprüche 9 bis 12, dadurch gekennzeichnet, daß ein dem Brühwasserbehälter (9) zugepaßtes ergänzendes Heizelement (12) vorgesehen ist.

14. Gerät nach einem der Ansprüche 9 bis 13, dadurch gekennzeichnet, daß zwischen dem Brühwasserbehälter (9) und dem Preßwasserbehälter (10) wärmeleitende Elemente (13, 14) vorgesehen sind.

15. Gerät nach Anspruch 14, dadurch gekennzeichnet, daß als wärmeleitendes Element eine in den Brühwasserbehälter (9) hineinragende Metallspi-rale (13) und/oder in der Begrenzungswand von Brühwasserbehälter (9) und Preßwasserbehälter (10) angeordnete Metallniete (14) vorgesehen sind.

16. Gerät nach einem der Ansprüche 9 bis 15, dadurch gekennzeichnet, daß der Brühwasserbehälter (9) und der Preßwasserbehälter (10) durch eine als Membrane ausgebildete elastische Wand (15) getrennt ist.

17. Gerät nach Anspruch 16, dadurch gekennzeichnet, daß die elastische Wand (15) als ein dem Eintritt des Mahlguthalters (4) zugepaßter kugel-artiger Körper ausgebildet ist.

18. Gerät nach einem der Ansprüche 9 bis 16, dadurch gekennzeichnet, daß der Heizkessel (1) zylindrisch ausgebildet ist, wobei die dem Heizkessel (1) benachbarte Wand des Brühwasserbehälters (9) als elastische Wand (15) und die dem Preßwasserbehälter (10) benachbarte Wand als versteifte oder in sich steife Wand (16) ausgebildet sind.

19. Gerät nach einem der Ansprüche 9 bis 16, dadurch gekennzeichnet, daß der Brühwasserbehälter (9) und der Preßwasserbehälter (10) durch eine steife Wand (16) getrennt und durch eine Öffnung (17) verbunden sind, wobei die Öffnung im Brühwasserbehälter (9) oberhalb des Niveaus des Brühwassers (32) angeordnet ist.

20. Gerät nach einem der Ansprüche 9 bis 19, dadurch gekennzeichnet, daß die Verjüngung (6) im Ventil (19) ausgebildet ist.

21. Gerät nach einem der Ansprüche 9 bis 20, dadurch gekennzeichnet, daß die Verjüngung (6) mit einer Stauöffnung (18) oder mit einer Düse ausgebildet ist.

22. Gerät nach Anspruch 20 oder 21, dadurch gekennzeichnet, daß nach der Verjüngung (6) eine Saugöffnung (37) und/oder ein Stauelement (35) vorgesehen ist.

Fig.1

Fig.3

1/3

0148982

Fig. 2

Fig. 4

0148982

Fig. 5

Fig. 6

Fig. 7